# EUROPEAN PATENT SPECIFICATION

(11) **EP 1 543 377 B1**
(45) Date of publication and mention of the grant of the patent: **23.07.2014**
(21) Application number: 03798248.5
(22) Date of filing: 31.03.2003
(51) Int. Cl.: G02C 7/02

(54) **MINUS POWER SPECTACLE LENS AND METHODS OF ITS PRODUCTION**
BRILLENLINSE MIT MINUSSTÄRKE UND VERFAHREN ZU IHRER HERSTELLUNG
VERRE DE LUNETTES A CORRECTION NEGATIVE ET PROCEDES DE PRODUCTION DE CELUI-CI

(30) Priority: 24.09.2002 IT BA20020033
(43) Date of publication of application: 22.06.2005
(73) Proprietor: Roscini, Giuseppe, 70054 Giovinazzo (IT)
(72) Inventor: Roscini, Giuseppe, 70054 Giovinazzo (IT)
(74) Representative: Locas, Davide
(86) International application number: PCT/IB2003/001242
(87) International publication number: WO 2004/029694

(56) References cited:
- GB-A- 550 644
- US-A- 4 008 031
- US-A- 4 561 736
- US-A- 4 707 949

## Description

### Technical field

Subject of this invention is a myopic correcting lens for medium-to-strong to particularly strong prescriptions. In particular, the invention concerns a finished or semi-finished lens and the processing methods thereof. "Finished lens" means a lens with both surfaces finished, whereas "semi-finished" lens means a lens with one surface finished.

New high index mineral or plastic materials are continuously being developed. Finished lenses, whilst being of undiscussed aesthetic quality, are industrially produced only for medium to low correction. People with high myopia require strong correcting lenses with a short radius of curvature and thick edges, which are difficult or impossible to fit in some eyeglass frames, thus restricting the selection of frames nearsighted people can choose among. In addition, heavy eyeglasses are less comfortable and attractive. Cosmetics is further penalised by the "coke bottle" effect which is visible at the periphery of the eyeglasses. The effect is due to the reflections of the edging that the finished and fit lens causes to converge within, depending on the edge thickness.

In order to reduce the weight and thickness at the lens edges, the only method adopted has been that of reducing the size of the actual lens - that is the "lenticular" portion in which the prescribed power is provided. The remainder of the lens, the carrier, provides no refractive correction but gives dimension to the lens for mounting. These are the so called "lenticular lenses". The achieved reduction in weight and edge thickness is inversely proportional to the size of the lenticular portion of the lens. However, though lighter and thinner, lenticular lenses remain cosmetically unattractive because the central portion, which makes the eyes look fairly smaller, is clearly discernible within each ring of the eyeglasses as is the portion joining it to the carrier. This cosmetic dilemma has not been solved even by the so called "joint lenticular lenses" which feature a neutral or convex carrier and a round-shaped junction between the lenticular portion and the carrier. Examples of these lenses are described in US 4,561,736, disclosing a lens provided with an eye-side rear surface consisting of a central region, a surrounding outer region and a transition region between said central region and said outer region. The central region is developed as an aspheric surface. This lens has reduced thickness at the edges, nevertheless the use of an aspheric region in correspondence of the main field of view does not provide an optimal vision, as aberration phenomena may occur. Moreover, as a result of the round-shaped junction, the wide surface of the carrier takes on a high plus power in sharp contrast to the high minus power of the centre. Hence, a "tunnel effect" is produced which badly distorts the portion of the face which is covered with the lens. Lastly, the diameter of the actual optic area is insufficient to ensure viewing in all the natural directions of the gaze and forces the wearer to unnatural head postures in order to compensate for the limited freedom of movement of their eyes.

Also, the manufacturing of this kind of lens is quite complex, as it is necessary to work the lens according to a rather complex surface in the central portion thereof. In particular, known methods, e.g. the one described in US 4,707,949, GB 550644 or US 4,008,031, cannot be easily applied in all manufacturing techniques, both industrial and craftsman-like.

### Disclosure of the invention

The aforementioned technical problems are solved by the ophthalmic lens according to claim 1 and by the manufacturing method according to claim 9. In particular, the lens is a single-vision or multifocal eyeglass lens for medium-to-high to very high nearsightedness in plastic, mineral or other suitable material, lighter and thinner at the edges and ensuring a wide field of vision. It is cosmetically attractive, manufactured as a finished or semi-finished lens, featuring a spherical centre and an aspheric periphery, both asymmetrical to the lens optical centre (coinciding with the geometrical centre) and varying in width according to the power (central curvature of the lens) and the diameter (front width as viewed by an observer facing the eyeglass wearer) of the lens itself.

The invention also covers all the procedures involved in the manufacturing of the lens, based on both non industrial and CNC processing and moulding and/or injection moulding techniques.

These are some of the benefits which will become apparent in the detailed description of the lens design proposed. The reference tables 1/5, 2/5, 3/5, 4/5 and 5/5 provide a lens manufacturing plan which is to be regarded as an example and is by no way restrictive.

### Way of carrying out the invention

With reference to the above mentioned tables:
- Fig. 1 compares the prototype of a finished lens design (1) (right) to a conventional plano-concave lens (100) (left);
- Fig. 2 briefly illustrates the benefits of the asymmetrical lens surface during mounting;
- Fig. 3 reports some spatial projections of a surface calculation case;
- Fig. 4 and Fig. 5 illustrate the steps of the non industrial manufacturing process in the section of the lens along the reference diameter. The following are the symbols in use in the figures (some more symbols will be added throughout the description):
   C: optical and geometrical centre of the lens
   DD': reference diameter. It is the axis of symmetry, horizontal to a front viewer.
   AA': axis of the lens. It is the axis perpendicular to the reference diameter which passes through the centre (C). The lens is asymmetrical to AA' which, in turn, is vertical to a front viewer.
   S: initial thickness of the lens. It is that of an ordinary 100 plano-concave lens (with a constant curvature), having the same DD', the same power ϕ (central curvature) and the same index of refraction (IOR) *n*.
   Sc: centre thickness of the finished lens

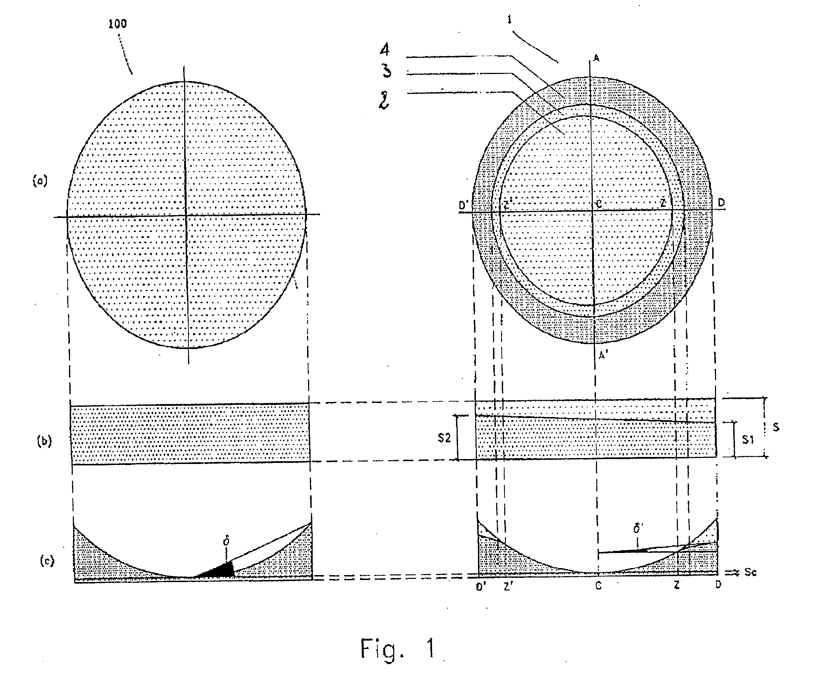

Fig. 1 compares three projections of the lens design (1) to the projections of an ordinary plano-concave lens (100) with a constant curve.

On the right side of Fig. 1, the minus lens is subdivided into two areas (Fig. 1a). A centrally spherical area (2) is encompassed within the ZZ' diameter, which defines the refractive correction of the lens, and equals 70% of DD' in width. This area is wider in large diameter and medium-to-low myopic power lenses and smaller in small diameter and medium-to-high to very high myopic power lenses (small radiuses of curvature). Tangential to it is an aspheric area, which consists of a paracentral area (3) encompassing the spherical area (2), with a diameter equal to 10% of DD'. A peripheral area (4) encloses the paracentral area; it is tangential to the central, spherical area and stretches down to the lens edge. This is the flattest area which allows for the reduced lens mass and thickness.

The three areas are adequately connected in space, the intersection between a plane perpendicular to that drawn by diameters DD' and AA' and the back surface of the lens being a polynomial curve which interpolates a set of accurately calculated points.

The end surface profile of the lens (1) (Fig. 1c) results from the summation of a series of portions of spherical surfaces. First, the diameter and the refractive correction of the lens are set: ϕ = (n-1)/R, where *n* is the refractive index of the material of which the lens is made and *R* is the radius of curvature.

The first surface, the one which corresponds to the central curvature, fit for providing the prescribed refractive correction, results from the intersection between the initial flat semi-finished material and a sphere with a radius R, the centre of which lies on the straight line passing through C and is perpendicular to the base of the semi-finished lens. The obtained profile is identical to that of a lens (100) (Fig. 1c to the left) with a constant curvature, an edge thickness S and a central thickness Sc.

The aspheric area of the lens is designed so that its axis is inclined with respect to the axis of the central area of an appropriate angle. By inclining the base of the semi-finished lens to make the final surface of the lens asymmetrical, the second and the following cuttings are made through a generally spherical surface Bn, the centre of which (Cn) lies along the half-line originating at C and having an inclination angle the radius Rn of which is correlated to the power of the peripheral area (ϕn), which is considered as constant. The centre Cn is extrapolated from the thickness S1 at the lens edge, corresponding to the extreme D of the reference diameter. S1 is a predetermined fraction of S. It follows that the thickness S2 corresponds to D'. For instance, if S1 equals 60% of S, S2 will be about 75% of S (Fig. 1b).

The process continues in a similar fashion, so that that the spheres with radiuses varying between R and Rn (R1, R2,..., Rn-1) or with decreasing powers from ϕ to ϕn (ϕ1, ϕ2, ..., ϕn-1) cut the cusps between the various portions of the spheres that are formed at each repetition and, at the end of the process, the resulting surface is satisfactorily joint in space. The value of *n* can be regarded as a design constant or a parameter to be increased, should the number of repetitions be insufficient to yield the required accuracy, or decreased, should the obtained accuracy exceed that of the tool used to cut the lens, be it a non-industrial or an industrial tool (CNC cutting machine). The concurrent action of the inclination of the axis of the aspheric periphery of the lens with respect to the axis of the centrally spherical area and the radial reduction in power towards the external edge of the lens contribute to making the lens surface asymmetrical with respect to AA' and causing a simultaneous, variable reduction in the thickness of the peripheral area. A further consequence of the inclination of the axis of the peripheral area is its varying width along DD'. It is maximum close to the minimum peripheral thickness S 1 and minimum at the maximum peripheral thickness S2.

The eccentricity of the peripheral area produces a gradual decrease in the central power of the lens with a subsequent reduction in the thickness at the edges. The advantage is that the points which are immediately adjacent to the central area (paracentral area) have a refractive correction close to that of the central area. The thickness at the edges, S 1 and S2 (Fig. 1b), is less than that of a 100 plano-concave lens having the same diameter, central thickness, refractive index and power. Hence, both the spherical and the aspheric areas are asymmetrical with respect to the centre C. The centrally spherical area ZZ' (Fig. 1a), the only one which retains the profile of the 100 plano-concave lens, stretches more to the left (CZ' portion) than to the right (CZ portion). The aspheric periphery is narrower to the left (D'Z' portion) than to the right (DZ portion). The surface curve variation which remains negative at all points is more marked along the DZ portion than along the D'Z' portion. The same power drop is reported along two segments (DZ and D'Z') and at two different heights, thus originating absolutely different profiles.

In section 1c, the end profile of the lens has been drawn, showing the amount of removed stock and the mitigated "coke bottle" effect when compared to the constant curvature lens (100). The angle δ' of the lens periphery (1) is smaller than the angle δ of any ordinary lens (100) - in which the prismatic effect causes the reflections of edging to converge towards the back side of the lens - and the reflections of the edging of the innovative lens are caused to converge outside the lens. In a front view, the lens (1) is thus free of the "coke bottle" effect which is typical of any minus power lens.

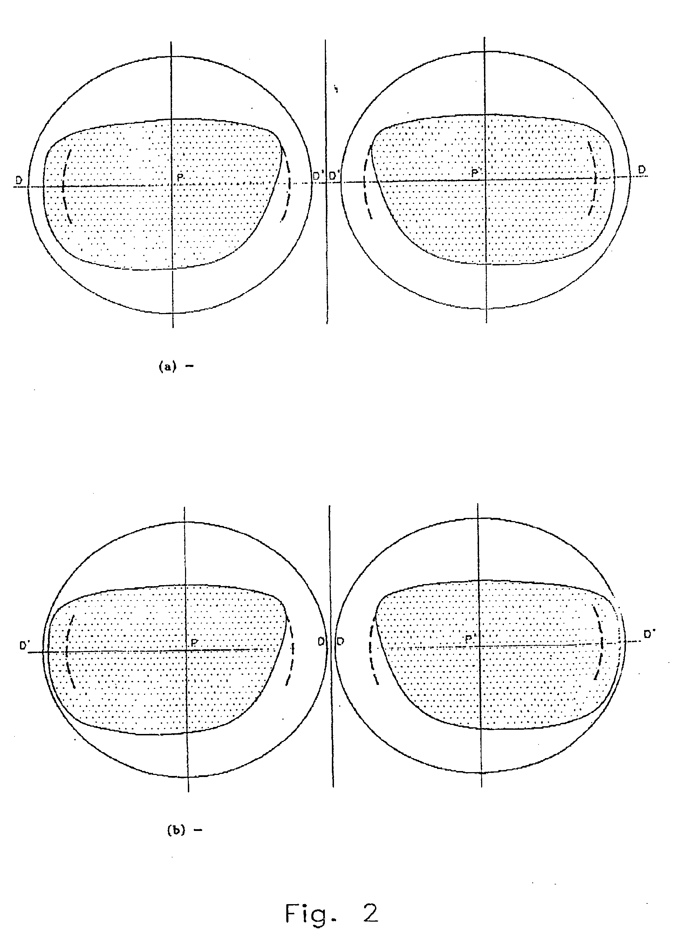

Fig. 2 documents the benefits of the asymmetrical surface of this lens design which complies, during mounting, with the interpupillary distance of wearers with a wide (Fig. 2a) or short distance (Fig. 2b). Being PP' the interpupillary distance, in the case of a wide interpupillary distance (Fig. 2a), it is advisable to cut the lens in such a way that, when the optical/geometric centre overlaps the pupillary centre P or P', the wider aspheric periphery coincides with the temple of the wearer and the narrower section with the nasal portion. By contrast, in the case of a short interpupillary distance (Fig. 2b), it is advisable to cut the lens so that the narrower section of the aspheric periphery coincides with the temple of the wearer and the wider section with the nasal portion. In both cases, the beneficial role of the asymmetrical surface of the lens is apparent. Regardless of the interpupillary distance of the wearer, the accurate centering of the eyeglasses is guaranteed. The central area (with a constant power) and the paracentral area (with a power close to the central one) cover most of the width of the outline of the eyeglasses and the wearer benefits from vision acuity in all the directions of the gaze, without having to resort to unnatural head movements, whereas the periphery, with a more marked power drop, lies at the extreme temple periphery of the eyeglasses, thereby diminishing the thickness and weight of the lens as well as the spherical aberration, which is typical of lenses with a small radius of curvature and high edge thickness, and nullifying the reflections of the lens edging.

As far as cosmetics and function are concerned, the aspheric surface noticeably improves the lens. The power drop, beside reducing the spherical aberration, also lessens the shrinking effect which is produced by the periphery, thus preventing any distortion of the face of the wearer covered with eyeglasses, as viewed from the outside.

Fig. 2 a and Fig. 2b are but general sketches. According to the prescribed power, the actual interpupillary distance, the selected frame and the desired cosmetic effect, the best diameter, the best aspheric shape of the lens and the portion of the periphery with a different power drop to be located at the temple can be selected.

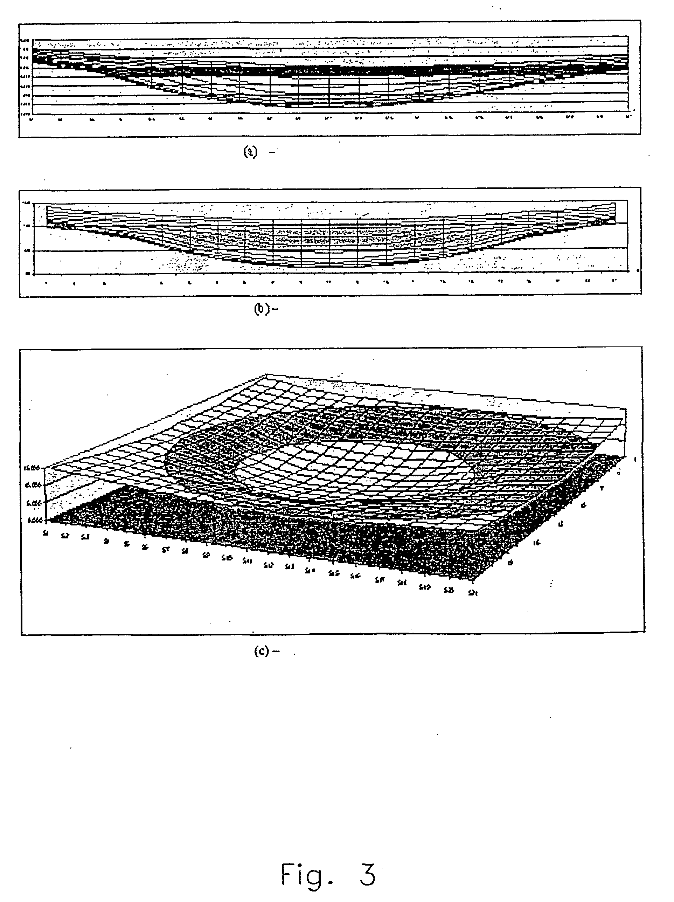

The lens can be manufactured as a "semi-finished" or "finished" lens. The "semi-finished" lens is obtained from a blank (unfinished on both sides) which is finished on the back surface alone with a precise dioptric power. From this semi-finished lens a wide range of prescribed dioptric powers can be derived by finishing the front side in a spherical or toric fashion. The finished lens is obtained from a semi-finished lens, with the front side already conventionally finished with a given dioptric power. The back side is finished to give the lens the prescribed power. By adjusting some or all the design parameters (diameter, power, thickness at the edges along the DZ portion, width of the central area, central thickness of the finished lens, constant or repeatedly variable inclination of the half-lines on which the centres of the spheres which form the periphery lie) a vast array of profiles can be obtained. Among the processing methods in use for this innovative lens design, noteworthy is the CNC machining which, thanks to the recent strides made in technological and industrial research, yields accurate free-form surfaces, while ensuring better optic quality and lower product costs. Fig. 3 reports some spatial projections of a numerically calculated surface. Fig. 3a shows a projection of the back surface of the lens onto the plane Π1 passing through the reference diameter (DD') and perpendicular to the axis (AA'), highlighting the difference in edge thickness (S 1 and S2) and profile and the general asymmetry between the right side and the left side with respect to the axis AA', perpendicular to the plane of the drawing. Fig. 3b shows a projection of the back surface of the lens onto the plane Π2 passing through the axis AA' and perpendicular to the diameter DD'. Fig. 3c shows a projection of the back surface of the lens onto the plane Π3 with a 25° rotation with respect to Π1 and a 10° inclination towards the viewer, so as to display the surface as a whole.

"Finished" lenses for the most common power intervals and "semi-finished" lenses (from which all prescribed powers can be derived) can be industrially produced for moulding or, in the case of thermoset plastic materials, for injection moulding in ready-made moulds. Should the invention be industrially manufactured, reduced production costs would go hand in hand with accrued eyeglass customisation.

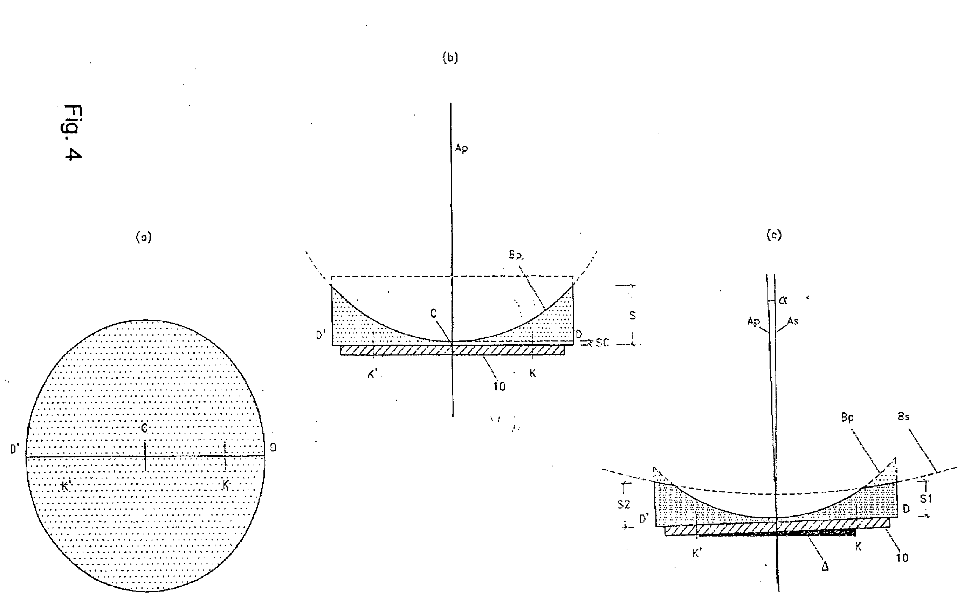

This innovative lens design can also be manually produced. Manufacturing would be more time-consuming, but undoubtedly cost-effective, given the limited piece of equipment required. A detailed description of the manufacturing process follows in Fig. 3 and 4 which show the section of the lens along DD'. This is but an example and it is in no way restrictive. Should anyone wish to manufacture a prototype of a minus power lens with a DD' = 70mm, a flat front surface, central thickness SC = 1mm and power expressed in dioptres ϕ = (n-1)/R depending on the index of the selected material, the following values would apply: R = 50mm, n = 1.500, hence, ϕ = -10D. The semi-finished lens would have a front flat surface on which the reference diameter DD', the geometrical centre C and a central portion KK', having a width equal to a predetermined fraction of DD', would be temporarily marked. KK' should preferably ≈ 65% DD' (Fig. 4a). The marking of KK' helps manufacture the aspheric periphery of the lens. Fig. 4b illustrates the first step, the so called "rough grinding" of the lens. Using a conventional surface generator, after clamping the semi-finished lens to the stand (10) which, in turn, is firmly locked to the generator, stock is removed from the back side of the semi-finished lens, thus generating a spherical surface or principal base Bp, which is expressed in dioptres and coincides with the power of the lens under grinding, e.g. Bp = -10. The depth of stock removal is selected so as to obtain the desired centre thickness Sc, e.g. Sc = 1mm. Stock removal based on Bp will also define the edge thickness S, which in this case would be 15 mm.

Then, (Fig. 4c) a surface having a Bs base or secondary base is generated as a predetermined fraction of Bp, preferably Bs ≈ 25% Bp, hence Bs = -2.50. During this second phase of grinding, the axis Ap of the principal base Bp is maintained inclined with respect to the axis As of the secondary base Bs at a corresponding angle α. As shown in Fig. 4c, in order to obtain the reciprocal inclination between Ap and As, a "prismatic ring" or wedge Δ is inserted between the lens and the generator chuck and oriented along the reference diameter DD', with its base towards D. The wedge gives asymmetry to the final surface of the lens. The Δ value (expressed in prismatic dioptres) of the wedge is a fraction of the thickness S as defined above - preferably Δ ≈ 10% S, in the case in point, Δ = 1.5. The depth of stock removal to generate Bs should be selected so that, at D, the lens thickness becomes S1 ≈ 60% S, that is s1 = 9mm. As a result, at D', the side opposite to S1, the lens thickness S2 is automatically defined. In the example, S2 = 11.25 mm, that is S2 ≈ 75% S. In addition, Fig. 4c shows

that, owing to the prismatic ring, when defining the variable thickness along the lens edge, the base Bs varies in width. In the section of the main diameter DD' it reaches its peak width on the side of the minimum thickness S1 and drops to its minimum width on the side of the maximum thickness S2. Hence, the central portion of Bp is asymmetrical to the geometrical centre of the lens.

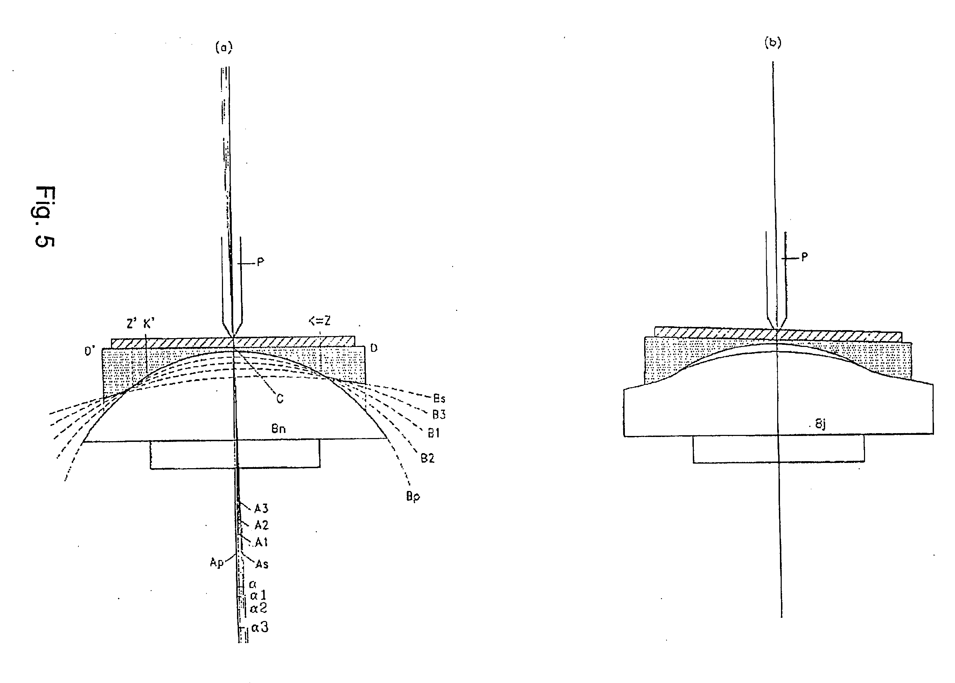

The next step of the process is called "lapping" (Fig. 5) and it draws the ultimate contour of the lens back side. A conventional lapping machine can be used to this end. After lapping both surfaces (Bp and Bs) with the appropriate spherical tools, having the same bases (Bp and Bs), lapping proceeds so that the tools with bases Bn, ranging between Bp and Bs, cut the cusps in between the various portions of the spherical surfaces which are generated at every stroke. A gradual transition from the lens edge to K is thus obtained, temporarily marked at the centre, with a satisfactory spatial connection. The calculations for selecting Bn tools and the amount of stock to be removed are referred to the area of the lens with thickness S1. It follows that typical values of the area corresponding to the thickness S2 are inferred. The sequential Bn value to be assigned to the base of the tool at every stroke is extrapolated from the arithmetical mean between the base of the reference portion of the surface and that of the externally adjacent portion. In the example, B1 = (Bp + Bs)/2 = 6.25; B2 = (Bp + B1)/2 = 8.12; B3 = (B1 + Bs)/2 = 4.37. The depth of stock removal of each base is such that each stroke removes approximately half of the innermost reference surface.

As shown in Fig. 5a, in the lapping system, a rod P, through a ball-and-socket joint, ensures uniform distribution of pressure and freedom of rotation and transmits an oscillation to the lens which is kept flush with the tool (Bn). Hence, every time a spherical tool with a new base is used, the lens self-centres onto the temporary chamfer resulting from the intersection of the previously used bases and takes on a varying inclination αn < α. As a consequence, every newly generated surface portion is not concentric, but variously connected at every point, thus originating an overall aspheric surface, which is asymmetrical to the optical/geometrical centre of the lens. It is worth underscoring that only some surfaces with major curvature differences have been highlighted in Fig. 5a. The number of required tools will vary with the desired accuracy, function and cosmetics of the lens. In order to eliminate any residual discontinuity at the periphery of the lens, an optional tool Bj can be used in a resistant but soft material (Fig. 5b), with a mean curvature with respect to the previously used tools. Given the type of material in use, the tool will take on the same outline of the periphery of the lens, as expected.

The last step of the process, "polishing", performed with very fine abrasives and following the same procedure adopted for lapping, completes the lens processing.

## Claims

1. An ophthalmic lens for nearsightedness (1), having a eye-side back surface comprising a spherical central area (2) and an aspheric paracentral area (3, 4), the aspheric paracentral area (3, 4) being at least partially surrounding the central area (2) when the lens (1) is cut for being mounted on an eyeglass frame and/or being surrounding the central area (2) when the lens (1) is uncut, wherein said central area (2) is circular and said aspheric paracentral area (3, 4) is an annular surface surrounding said central area (2) when the lens is uncut **characterized by** the fact that said central area (2) develops as a spherical surface with constant power and said paracentral area (3, 4) develops as an aspheric surface with decreasing power with respect to central area (2), said spherical area (2) and said aspheric area (3, 4) having both an asymmetric arrangement with respect to a geometrical centre (C) of the lens, said geometrical centre (C) coinciding with the optical centre of the lens.

2. The ophthalmic lens (1) according to claim 1, wherein said spherical area (2) and said aspheric area (3, 4) are both asymmetrical to an axis of symmetry (AA') of the lens, said axis (AA') being perpendicular to a reference diameter (DD') of the lens passing through said geometrical centre (C) of the lens and being horizontal to a front viewer.

3. The ophthalmic lens (1) according to any of claims 1 to 2, wherein said central spherical area (2), defining the refractive correction of the lens, has a width equal to 70% of the reference diameter (DD').

4. The ophthalmic lens (1) according to claim 3, wherein said central area (2) and said paracentral area (3, 4) are connected in the space so as to obtain a gradual transition.

5. The ophthalmic lens (1) according to any of the preceding claims, wherein said aspheric area is defined by a plurality of portions of spherical surfaces (B1, B2, B3,..., Bs).

6. The ophthalmic lens (1) according to claim 5, wherein said spherical surfaces (B1, B2, B3,..., Bs) have a decreasing refractive correction from the centre to the periphery.

7. The ophthalmic lens (1) according to claim 5 or 6, wherein said portions of the spherical surfaces (B1, B2, B3,..., Bs) are designed so that their respective axis (A1, A2, A3,..., As) are inclined with respect to the axis (Ap) of the central spherical area (2).

8. The ophthalmic lens (1) according to any of the preceding claims, wherein the lens (1) is produced by moulding.

9. A manufacturing process of an ophthalmic lens (1) according to any of the preceding claims, comprising a first step of rough grinding, consisting of removing stock from the back side of a semi-finished lens, thus generating a principal spherical surface (Bp), corresponding to said central spherical surface (2), and a second step of rough grinding, consisting of generating a secondary spherical surface (Bs), **characterized in that** the corresponding dioptric power defined by said secondary spherical surface (Bs) is a predetermined fraction of the principal spherical surface (Bp) and the axis (As) of said secondary spherical surface (Bs) is inclined with respect to the axis (Ap) of the principal spherical surface (Bp).

10. The manufacturing process according to claim 9, comprising a further step of lapping consisting of a plurality of cuttings made through a plurality of spherical surfaces (B1, B2, B3,...,Bn), the axis (A1, A2, A3,..., An) of the spherical surfaces (B1, B2, B3,...,Bn) being inclined with respect to the axis (Ap) of the central spherical surface (2), the power of spherical surfaces (B1, B2, B3,...,Bs) being a predetermined fraction of the power of the central spherical surface (2), thus eliminating the cusps between the various portions of spherical surfaces which are formed at every stroke so as to obtain a gradual transition from the lens edge to the centre.

11. The manufacturing process according to claim 10, wherein in said lapping step a rod, via a ball-and-socket joint, transmits oscillations to the lens which is kept flush with the spherical tool and self-centres on the temporary chamfer produced by the intersection between the previously used surface (B1, B2, B3,...,Bs), thus taking on a different inclination.

12. The manufacturing process according to any of claims 10 to 11, comprising a further step of polishing following said steps of lapping.

## Patentansprüche

1. Eine ophthalmologische Linse für Kurzsichtigkeit (1), die eine Augenseitenrückseitenoberfläche hat, die einen sphärischen zentralen Bereich und einen Bereich aspheric parazentrales (3, 4) umfasst, Die asphärische parazentrales Umgebung (3,4) wird zumindest teilweise der Zentralbereich (2) Wenn man das Linse (1) für die Bereitstellung auf einem Brillengestell verfugbar wird der Zentralbereich (2) Wenn das Objektiv (1) ungeschnitten, worin ist sagte zentralen Bereich (2) ist kreisförmig und genannten asphärischen parazentrales Bereich (3,4) ist ein ringförmiger Oberfläche umgibt sagte Zentralbereich (2) Wenn das Objektiv ungeschnitten ist geprägt durch die Tatsache, das sagte Zentralbereich (2) entwickelt, als eine kugelförmige Oberfläche mit konstanter Leistung und parazentrales Bereich (3,4) entwickelt als eine asphärische Fläche mit abnehmender Leistung in Bezug auf zentralen Bereich (2), sagte, sagte sphärische Fläche (2) und sagte asphärische Fläche (3,4) haben beide eine asymmetrische Anordnung in Bezug auf ein geometrisches Zentrum (C) der Linse, sagte geometrische Zentrum (C) zeitgleich mit dem optischen Zentrum der Linse.

2. Die ophthalmologische Linse (1) nach Anspruch 1, wobei sphärische Fläche (2) und sagte asphärisches ein Bereich (3,4) sind beide asymmetrisch auf einer Achse Symmetrieachse (AA') des Objektivs, sagte Achse (AA') wird senkrecht zu einem Teilkreisdurchmesser (DD') des Objektivs auf der Durchreise genannten geometrischen Zentrum (C) des Objektivs und wird horizontal zu einem front-Viewer.

3. Das ophthalmologische Linse (1) nach einem der Ansprüche 1 bis 2, wobei genannten zentralen sphärische Gebiet (2), definieren die refraktive Korrektur der Linse, eine Breite entspricht 70 % des der Teilkreisdurchmesser hat (DD').

4. Die ophthalmologische Linse (1) nach Anspruch 3, wobei genannten zentralen Gebiet (2) und sagte parazentrales Bereich (3,4) in den Raum um einen allmählichen Übergang zu erhalten verbunden sind.

5. Die ophthalmologische Linse (1) nach einem der vorhergehenden Ansprüche, wobei genannten asphärischen Gebiet durch eine Vielzahl von Teil der sphärischen Flächen (B1, B2, B3,..., Bs) definiert ist.

6. Die ophthalmisch Linse (1) nach Anspruch 5, wobei sagte kugelförmige Oberfläche (B1, B2, B3,..., Bs) haben eine abnehmende Refraktive Korrektur vom Hauptbahnhof an die Peripherie.

7. Die ophthalmologische Linse (1) nach Anspruch 5 oder 6, wobei gesagt Teile der sphärischen Flächen (B1, B2, B3,..., Bs) sollen damit ihre jeweiligen Achse (A1, A2, A3,..., As) sind geneigt, in Bezug auf die Achse (Ap) der sphärischen Zentralbereich (2).

8. Die ophthalmologische Linse (1) nach einem der vorhergehenden Ansprüche, wird das Linse (1) worin von Guß hergestellt.

9. Ein Herstellungsverfahren eine ophthalmologische Linse (1) gemäß einem der vorstehenden Ansprüche, bestehend aus ein erster Schritt von Grobschleifen, bestehend aus Lager von der Rückseite einer halbfertigen Linse entfernen sagte und erzeugt damit eine wesentliche kugelförmige Oberfläche (Bp), entspricht, zentrale kugelförmige Oberfläche (2) und die zweite Stufe des grob mahlen, bestehend aus generieren eine sekundäre kugelförmige Oberfläche (Bs), charakterisiert, dass die entsprechende dioptrische macht festgelegten sekundären sagte kugelförmige Oberfläche (Bs) ist ein vorgegebenen Bruchteil der wichtigsten kugelförmige Oberfläche (Bp) und die Achse (As) der genannten sekundären kugelförmige Oberfläche (Bs) ist geneigt, in Bezug auf die Achse (Ap) der wichtigsten kugelförmige Oberfläche (Bp).

10. Der Herstellungsverfahren nach Anspruch 9, bestehend aus ein weiterer Schritt der Läppen, bestehend aus einer Pluralität von schneiden, die durch eine Vielzahl von kugelförmige Oberfläche (B1, B2, B3,..., Bn), die Achse (A1, A2, A3,..., An) von der kugelförmigen Oberfläche (B1, B2, B3,..., Bn) wird in Bezug auf die Achse (Ap) der zentralen sphärische Fläche (2) geneigt, so entfremden die Spitzen zwischen die verschiedenen Teile des sphärischen Flächen, die bei jedem Schlag um einen allmählichen Übergang von der Objektiv-Kante zur Mitte zu erhalten gebildet werden.

11. Der Herstellungsverfahren nach Anspruch 10, wobei in besagten plätschernden Schritt eine Rute über eine Ball - und - Gewindemuffe, Schwingungen auf die Linse überträgt die bündig mit dem kugelförmigen Werkzeug und selbst Zentrum auf die temporäre Fase, produziert von der Kreuzung zwischen der zuvor verwendete Oberfläche (B1, B2, B3,..., Bs), so dass auf eine andere Neigung gehalten wird.

12. Die Herstellungsverfahren nach einem der Ansprüche 10 bis 11, bestehend aus ein weiterer Schritt der genannten Schritte von Läppen Polieren.

## Revendications

1. Une lentille ophtalmique pour la myopie (1) qui a une surface arrière comprenant une zone sphérique centrale (2) et une zone asphérique para-centrale (3,4), la zone asphérique para-centrale (3,4) étant entouré au moins partiellement de la zone centrale (2) lorsque la lentille (1) est découpée pour être monté sur un cadre et/ou est entouré par la zone centrale (2) lorsque la lentille (1) est intacte, dans lequel ladite zone centrale (2) est circulaire et la zone para-centrale asphérique (3,4) au-dessus est une surface annulaire qui entoure la zone centrale (2) lorsque la lentille est intacte, **caractérisé par le fait que** cet zone central (2) est conçu comme une surface sphérique avec une puissance constante, et ladite zone para-centrale (3,4) est conçu comme une surface asphérique avec une puissance décroissante par rapport à la zone centrale (2), ladite zone sphérique (2) et la zone asphérique (3,4) ont tous les deux un agencement asymétrique par rapport au centre géométrique (C) de la lentille, ledit centre géométrique (C) correspond au centre optique de la lentille.

2. La lentille ophtalmique (1) selon la revendication 1, dans lequel ladite zone sphérique (2) et ladite zone asphérique (3,4) les deux sont asymétriques par rapport à un axe de symétrie (AA') de la lentille, ledit axe est perpendiculaire à un diamètre de référence (DD') de la lentille qui passe par le centre géométrique (C) de la lentille et est horizontal pour celui qui la regarde de face.

3. La lentille ophtalmique (1) quelconque des revendications 1 à 2, dans lequel ladite zone sphérique (2) définissant la correction de réfraction de la lentille, a une largeur égale à 70% du diamètre de référence (DD').

4. La lentille ophtalmique (1) selon la revendication 3, dans lequel ladite zone centrale (2) et ladite zone para-centrale (3,4) sont reliées dans l'espace de manière à obtenir une transition graduelle.

5. La lentille ophtalmique (1) selon l'une des revendications précédents, dans lequel ladite zone asphérique est définie par une pluralité de portions de surfaces sphériques (B1,B2,B3,..Bs).

6. La lentille ophtalmique (1) selon la revendication 5, dans lequel ces surfaces sphériques (B1,B2,B3..Bs) de la lentille ophtalmique ont une correction de réfraction décroissante du centre vers l'extérieur.

7. La lentille ophtalmique (1) selon la revendication 5 ou 6, dans lequel les portions précitées de surfaces sphériques (B1,B2,B3..Bs) des lentilles ophtalmiques sont conçus de telle sorte que leurs axes respectifs (A1,A2,A3,..As) sont inclinés par rapport à l'axe (Ap) de la zone sphérique central (2).

8. La lentille ophtalmique (1) selon l'une des revendications précédents, dans lequel la lentille ophtalmique (1) est réalisé par moulage.

9. Un processus de fabrication de la lentille ophtalmique (1) selon l'une des revendications précédents, comprend une première étape de dégrossissage, consistant à enlever un morceau de la face arrière de la lentille semi-finie, générant ainsi une surface sphérique principale (Bp), correspondant à ladite zone sphérique principale (2), et dans une seconde étape de dégrossissage, consistant à générer une zone sphérique secondaire (Bs), **caractérisé par** la puissance dioptrique correspondante définie par ladite surface sphérique secondaire (Bs) est une fraction prédéterminée de la surface sphérique principale (Bp) et de l' axe (As) principale de ladite surface sphérique secondaire (Bs) qui est inclinée par rapport à l'axe (Ap) de la surface sphérique principale (Bp).

10. Le processus de fabrication selon la revendication 9, comprend une étape supplémentaire de rodage consistant en une pluralité de coupes effectuées à travers une pluralité de surfaces sphériques (B1,B2,B3...Bn), l'axe (A1,A2,A3,..An) des surfaces sphériques (B1,B2,B3,...Bn) est incliné par rapport à l'axe (Ap) de la surface sphérique central (2), la puissance des surfaces sphériques (B1,B2,B3,...Bs) est une fraction prédéterminée de la puissance de la surface sphérique centrale (2), de manière à éliminer les points de rebroussement entre les différentes parties des surfaces sphériques qui sont formés à chaque coup pour obtenir une transition progressive du bord de la lentille vers le centre.

11. Le processus de fabrication selon la revendication 10, dans lequel la phase de rodage, grâce à une articulation sphérique une tige transmet les vibrations de la lentille qui est maintenue en affleurement avec un outil sphérique et à centrage automatique sur le chanfrein temporaire produit par l'intersection des surfaces utilisées précédemment (B1,B2,B3,...Bs), prenant ainsi une inclinaison différente.

12. Le processus de fabrication selon la revendication 10 ou 11, comprend une étape supplémentaire de polissage suivie par les étapes précitées du rodage.
